# EUROPÄISCHE PATENTANMELDUNG

(11) **EP 4 417 348 A1**
(43) Veröffentlichungstag der Anmeldung: **21.08.2024**
(21) Anmeldenummer: 24157427.6
(22) Anmeldetag: 13.02.2024
(51) Int. Cl.: B23B 51/06

(54) **EINLIPPENBOHRER MIT AUSWECHSELBAREN FÜHRUNGSLEISTEN**

(30) Priorität: 15.02.2023 DE 102023103626
(71) Anmelder: Botek Präzisionsbohrtechnik GmbH, 72585 Riederich (DE)
(72) Erfinder: Deeg, Jürgen, 72555 Metzingen (DE); Kammerer, Patrick, 72147 Nehren (DE); Ruof, Jürgen, 72813 Ohnastetten (DE); Kirschner, Bernd, 72585 Riederich (DE)
(74) Vertreter: DREISS Patentanwälte PartG mbB

(57) **Zusammenfassung**

Es wird ein Einlippenbohrer vorgestellt, der auswechselbare Führungsleisten 27 aufweist und der insbesondere zur Herstellung kleiner Bohrungen geeignet ist. Gegenüber herkömmlichen Einlippenbohrern weist er einen Kühlschmiermittelkanal 43 mit vergrößertem Durchmesser auf.

## Beschreibung

Die Erfindung betrifft einen Einlippenbohrer mit auswechselbaren Führungsleisten mit einer verbesserten Versorgung mit Kühlschmiermittel.

Einlippenbohrer mit auswechselbaren Führungsleisten und auswechselbaren Schneidplatten sind an sich bekannt; zum Beispiel aus der DE 27 39 685 C2, der DE 25 22 565 A1 oder der US 2011/0033255 A1.

Auswechselbare Schneidplatten und auswechselbare Führungsleisten haben den Vorteil, dass bei Bedarf lediglich die verschlissene Schneidplatte oder die verschlissenen Führungsleisten ausgewechselt werden müssen. Der eigentliche Einlippenbohrer unterliegt einem sehr viel geringeren Verschleiß als die Schneidplatten und die Führungsleisten. Er kann daher deutlich länger als diese eingesetzt werden. Außerdem kann der Einlippenbohrer zum Bohren verschiedener Werkstoffe eingesetzt werden, indem beispielsweise Schneidplatten mit entsprechend angepasster Schneidengeometrie eingesetzt werden.

Die Schneidplatte wird in einen Plattensitz und die Führungsleisten werden in Vertiefungen des Bohrkopfs eingesetzt und mit Hilfe von jeweils einer Befestigungsschraube an dem Bohrkopf befestigt, die in entsprechende Innengewinde des Bohrkopfs eingedreht werden.

In dem Bohrerschaft und den Bohrkopf ist ein Kanal für Kühlschmiermittel vorgesehen. Durch diesen Kanal wird unter Druck stehendes Kühlschmiermittel vom Einspannende bis zur Spitze des Einlippenbohrers gefördert. Dort tritt das Kühlschmiermittel aus. Es kühlt die Bohrerschneide und schmiert die Führungsleisten. Das Kühlschmiermittel fließt durch eine Sicke wieder an das Einspannende des Bohrers zurück. Dabei transportiert das Kühlschmiermittel die von der Schneide erzeugten Späne aus der Bohrung heraus. Die Sicke sollte möglichst groß sein, um eine reibungslose Spanabfuhr zu gewährleisten.

Es liegt auf der Hand, dass mit abnehmendem Bohrdurchmesser der für den Kanal und die Sicke zur Verfügung stehende Platz abnimmt. Man ist bestrebt, den Querschnitt bzw. den Durchmesser des Kühlschmiermittelkanals so groß wie möglich zu wählen, damit eine große Menge Kühlschmiermittel bei relativ geringer Pumpleistung durch den Kanal an die Spitze des Einlippenbohrers transportiert werden kann. Andererseits ist man ebenfalls bestrebt, die Sicke möglichst groß zu machen, um eine störungsfreie Späneabfuhr zu gewährleisten. Zudem muss der verbleibende Werkzeuggrundkörper ausreichend Stabilität aufweisen, um den statischen und dynamischen Belastungen im Bohrprozess Stand zu halten und die Maßhaltigkeit der erzeugten Bohrung sicherzustellen.

Im Bereich des Bohrkopfs müssen noch ein Plattensitz für die auswechselbare Schneidplatte sowie zwei Vertiefungen zur formschlüssigen Aufnahme der auswechselbaren Führungsleisten untergebracht werden. Sowohl im Plattensitz als auch in den Vertiefungen ist mindestens ein Innengewinde vorhanden. Erfordert der Bohrprozess längere Führungslängen, so sind jeweils zwei Führungsleisten hintereinander in einer Vertiefung angeordnet. Dann sind zwei Innengewinde pro Vertiefung bzw. Führungsleistensitz vorgesehen.

In der Schneidplatte und den Führungsleisten sind in der Regel gestufte Bohrungen vorhanden. Durch diese Bohrungen werden Schrauben gesteckt und in die entsprechenden Innengewinde im Bohrkopf eingedreht, so dass die Schneidplatte und die Führungsleisten sicher in dem Plattensitz bzw. den Vertiefungen positioniert und gehalten werden.

Die Innengewinde der Schneidplattenaufnahme und der Vertiefungen dürfen den Kanal für das Kühlschmiermittel nicht tangieren, da andernfalls der Kanal undicht würde.

In der US 2011/0008116 A1, der US 2011/0033255 A1 und der EP 2216115 A1 wird ein Ansatz beschrieben, um Abhilfe für das "Platzproblem" im Bohrkopf von Einlippenbohrern mit einem Bohrer-Durchmesser von beispielsweise zehn bis zwölf Millimetern zu schaffen. Der Ansatz besteht darin, zwei parallele Kühlschmiermittelkanäle mit relativ kleinem Durchmesser im Schaft des Bohrers und im Bohrkopf vorzusehen. Diese Kühlschmiermittelkanäle münden in eine außen am Bohrkopf ausgebildete Kühlschmiermittelnut (siehe zum Beispiel das Bezugszeichen 5 in der Figur 1 der US 2011/0008116 A1). Durch diese Maßnahmen ein großer Strömungsquerschnitt auch im Bereich des Bohrkopfs bereitgestellt werden.

Diese Vorgehensweise ist erstens sehr teuer in der Herstellung, weil das Herstellen von zwei Kühlschmiermittelkanälen naturgemäß mehr Kosten verursacht, als das Herstellen eines Kühlschmiermittelkanals. Zudem kann das Einbringen von solchen Bohrungen sehr kleinen Durchmessers nur vergleichsweise langsam erfolgen und ist zudem fehleranfällig. Außerdem haben bei gleicher Querschnittsfläche zwei kleine Kühlschmiermittelkanäle einen größeren Strömungswiderstand als ein Kühlschmiermittelkanal.

Der Erfindung liegt die Aufgabe zugrunde, einen Einlippenbohrer mit auswechselbaren Führungsleisten und optional einer auswechselbaren Schneidplatte bereitzustellen, der für kleine Bohrungsdurchmesser geeignet ist und gegenüber dem Stand der Technik eine verbessere Zufuhr des Kühlschmiermittels ermöglicht. Außerdem soll der Bohrer kostengünstig in der Herstellung sein.

Diese Aufgabe wird bei einem Einlippenbohrer mit auswechselbaren Führungsleisten, umfassend einen Bohrkopf, wobei der Bohrkopf eine Sicke und einen Kühlschmiermittelkanal sowie zwei Vertiefungen zur formschlüssigen Aufnahme der Führungsleisten aufweist, wobei die Vertiefungen zwei parallele Seitenflächen und eine Grundfläche aufweisen, und wobei der Kühlschmiermittelkanal in eine Stirnseite des Bohrkopfs mündet, dadurch gelöst, dass entweder eine Breite der Grundfläche mindestens um 30% kleiner ist als ein Abstand der Seitenflächen der Vertiefungen oder, dass eine Breite der Seitenflächen mindestens 30% kleiner ist als eine Tiefe der Vertiefungen.

Das bedeutet, dass die Vertiefungen keinen rechteckigen Querschnitt aufweisen. Die erfindungsgemäßen Querschnitte der Vertiefungen ermöglichen die erforderliche genaue Positionierung und formschlüssige Verbindung zwischen den Führungsleisten und den Vertiefungen, andererseits benötigen sie weniger Platz im Bohrkopf, so dass bei sonst geleichen Bedingungen im Bohrkopf des Einlippenbohrers mehr Platz zwischen den Vertiefungen verbleibt. Dort ist ein Kanal für das Kühlschmiermittel mit entsprechend größerem Durchmesser vorgesehen.

Durch die erfindungsgemäße Formgebung der Vertiefungen kann bei sonst gleichen Randbedingungen der Querschnitt des Kühlschmiermittelkanals um etwa 40% vergrößert werden. Dadurch kann ein erheblich größerer Volumenstrom des Kühlschmiermittels an die Spitze des Einlippenbohrers gefördert werden. Das verbessert die Kühlung und Schmierung der Schneide sowie der Führungsleisten und führt infolgedessen zu einer höheren Standzeit der Schneide und der Führungsleisten. Außerdem wird die Spanabfuhr durch den erhöhten Volumenstrom an Kühlschmiermittel verbessert und ein Festsetzen von Spänen im Spankanal/in der Sicke wird verhindert. Dieses "Festsetzen" ist eine häufige Ursache für spontane Werkzeugbrüche beim Tiefbohren. Durch den erhöhten Volumenstrom erhöht sich die Prozesssicherheit im Bohrprozess.

Auch wird die realisierbare Bohrtiefe eines erfindungsgemäßen Einlippenbohrers gegenüber herkömmlichen Einlippenbohrern vergrößert. Der Strömungswiderstand des oder der Kühlkanäle nimmt mit größer werdender Werkzeuglänge und Kühlkanallänge zu. Bei einem erfindungsgemäßen Einlippenbohrer mit einem Kühlkanal mit großem Durchmesser wirkt sich eine Verlängerung des Werkzeugs und in Folge dessen auch des Kühlkanals deutlich weniger stark aus als bei einem Einlippenbohrer mit zwei Kühlkanälen mit kleinem Durchmesser.

Schließlich können durch die Verwendung des erfindungsgemäßen Einlippenbohrers bei Bohrmaschinen, deren Kühlschmiermittelzufuhr nur geringe Drücke und Fördermengen bereitstellt, größere Bohrtiefen und Vorschübe realisiert werden. Außerdem nehmen Produktivität, Prozesssicherheit und Standzeit zu.

Diese erfindungsgemäßen Vorteile kommen bei Einlippenbohrern aller Durchmesser zum Tragen. Übliche Bohrdurchmesser liegen derzeit im Bereich von etwa 10 mm bis 45 mm, wobei die Erfindung nicht auf diese Durchmesser beschränkt ist.

Besonders vorteilhhaft ist die Erfindung bei Einlippenbohrern mit kleinen Durchmessern - von zum Bespiel etwa 10 mm. Sie ermöglicht nicht nur, die Bohrtiefe dieser Einlippenbohrer zu vergrößern bei gleichzeitig verbesserter Prozesssicherheit; manche Anwendungsfälle lassen sich überhaupt nur mit einem erfindungsgemäßen Einlippenbohrer realisieren.

In der Regel beträgt der Durchmesser des Kühlmittelkanals bei kleinen Bohrerdurchmessern (d. h. von 9,5 mm bis 12,5 mm) etwa 20% des Bohrerdurchmessers. Er kann auch 22% oder sogar 25% betragen.

Weitere Vorteile des erfindungsgemäßen Einlippenbohrers sind darin zu sehen, dass die Herstellung eines Kanals mit größerem Durchmesser fertigungstechnisch einfacher ist als die Herstellung eines Kanals mit kleinem Durchmesser. Außerdem ist das zu zerspanende Volumen beim Herausfräsen der Vertiefungen im Bohrkopf kleiner als bei herkömmlichen Einlippenbohrern. Infolgedessen kann in vielen Fällen auch die Bearbeitungszeit für das Herstellen der Vertiefungen reduziert werden.

Überdies haben die Querschnitte der erfindungsgemäßen Vertiefungen eine geringere Kerbwirkung als herkömmliche Vertiefungen. Das wirkt sich positiv auf die die Stabilität des Bohrkopfs und dessen Fähigkeit aus, große Drehmomente vom Einspannende bis zur Schneidplatte zu übertragen.

Bei herkömmlichen Einlippenbohrern mit Vertiefungen, die einen rechteckigen Querschnitt mit scharfen Kanten an dem Übergang zwischen den Seitenflächen und der Grundfläche aufweisen, ist die Kerbwirkung erheblich.

Es hat sich als vorteilhaft herausgestellt, wenn zwischen einer Unterkante der Seitenflächen und einer seitlichen Begrenzung der Grundfläche mindestens eine ebene Verbindungsfläche vorgesehen ist. Diese Verbindungsfläche verläuft vorteilhafterweise unter einem Winkel von etwa 45° zwischen der Grundfläche und der Verbindungsfläche. In anderen Worten: sie halbiert den Winkel zwischen den Seitenflächen und der Grundfläche der Vertiefung. Dadurch schafft sie besonders viel Platz für den Kühlschmiermittelkanal und verringert die Kerbwirkung der Vertiefung, was der Leistungsfähigkeit des erfindungsgemäßen Einlippenbohrers zuträglich ist.

Es haben sich Winkel zwischen der Verbindungsfläche und der Grundfläche in einem Bereich zwischen 30° und 60° als vorteilhaft erwiesen. Aus besagten Gründen ist der Winkel von 45° in vielen Fällen zu bevorzugen.

Alternativ ist es auch möglich, dass zwischen den Seitenflächen und der Grundfläche mindestens ein Absatz vorgesehen ist. Auch durch diesen Absatz, der wie eine Treppenstufe ausgebildet sein kann, wird das Volumen der Vertiefung verglichen mit einer herkömmlichen Vertiefung mit rechteckigem Querschnitt verringert. Außerdem wird die Kerbwirkung verringert, so dass auch bei diesem Querschnitt der Vertiefung die erfindungsgemäßen Vorteile realisiert werden.

Es ist auch möglich, dass zwischen einer Unterkante der Seitenflächen und einer seitlichen Begrenzung der Grundfläche eine mindestens einfach gekrümmte Verbindungsfläche vorgesehen ist. Diese Verbindungsfläche kann als konkav oder konvex gekrümmt sein. In beiden Fällen ergibt sich dadurch eine Vergrößerung der Querschnittsfläche im Bohrkopf, die für den Kühlschmiermittelkanal zur Verfügung steht. Außerdem wird durch die runden Übergänge, beispielsweise wenn die Verbindungsfläche als Radius ausgebildet ist, die Kerbwirkung nochmals reduziert.

Bei einer konkav gekrümmten Verbindungsfläche wird die Kerbwirkung besonders stark reduziert. Bei einer konvex gekrümmten Verbindungsfläche kann der Bohrungsdurchmesser des Kühlschmiermittelkanals besonders stark vergrößert werden.

Wie üblich, erstrecken sich die Vertiefungen in ihrer Längsrichtung mehr oder weniger parallel zu einer Drehachse des Einlippenbohrers.

Eine weitere vorteilhafte Ausgestaltung der Erfindung sieht vor, dass die Vertiefungen, anders als im Stand der Technik üblich, nicht um 90° in Umfangsrichtung versetzt zueinander angeordnet sind, sondern dass sie um einen Winkel β, der größer als 90° ist, in Umfangsrichtung zueinander versetzt sind. Als besonders vorteilhaft hat sich ein Winkel von 115° herausgestellt. Ein Winkelversatz in einem Bereich zwischen 100° und 118° ist in vielen Fällen besonders vorteilhaft.

Der Winkel β zwischen den Führungsleisten bzw. den Vertiefungen darf auch nicht beliebig groß werden, weil dann der Querschnitt der Sicke entsprechend verkleinert werden muss.

Eine besonders vorteilhafte Ausgestaltung und Weiterbildung der Erfindung sieht vor, dass ein Mittelpunkt des Kühlschmiermittelkanals in der Mitte zwischen den Verbindungsflächen der beiden benachbarten Vertiefungen für die Führungsleisten angeordnet ist. Dies bedeutet, dass man die Wandstärken zwischen dem Kanal und den Vertiefungen für die Führungsleisten auf beiden Seiten des Kanals gleich groß ist. Dadurch kann der Durchmesser des Kanals maximiert werden.

Eine ähnliche Optimierung sieht vor, dass der Mittelpunkt des Kühlschmiermittelkanals in der Mitte zwischen einer zylindrischen Außenfläche des Bohrkopfs und einem Plattensitz einer auswechselbaren Schneidplatte des Bohrkopfs liegt. Auch dadurch ist sichergestellt, dass die Wandstärke zwischen dem Kühlschmierkanal und dem Außendurchmesser des Bohrkopfs bzw. zwischen dem Plattensitz der auswechselbaren Schneidplatte möglichst groß ist und gleichzeitig die Schwächung des Bohrkopfs minimiert wird.

Die Sicke, welche zur Abfuhr der Späne dient, wird von einer Spanfläche und einer Wand begrenzt. Die Spanfläche und die Wand schließen vorteilhafterweise einen Winkel zwischen 110° und 125° ein. Bevorzugt ist ein Winkel von 115°.

Die Erfindung wirkt sich auch auf die Führungsleisten aus, die in die erfindungsgemäßen Vertiefungen des Einlippenbohrers eingesetzt werden. Diese Führungsleisten umfassen eine Führungsfläche, die in der Regel zylindrisch ist und bei montierter Führungsleiste außen liegt, sowie mindestens zwei seitliche Begrenzungsflächen und mindestens eine Stützfläche, wobei die seitlichen Begrenzungsflächen parallel zueinander verlaufen und wobei die Begrenzungsflächen und die Stützfläche rechtwinklig zueinander angeordnet sind, dadurch gelöst, dass eine Breite der Stützfläche mindestens 30% kleiner ist, als ein Abstand der Begrenzungsflächen. In weiterer vorteilhafter Ausgestaltung sind eine Breite der Begrenzungsflächen mindestens 30% kleiner als eine Dicke der Führungsleiste.

Die erfindungsgemäßen Führungsleisten können in die erfindungsgemäßen Vertiefungen eingesetzt werden und gewährleisten einen Formschluss zwischen den Führungsleisten und den Vertiefungen, der genauso gut ist, wie bei einer herkömmlichen Vertiefung und einer herkömmlichen Führungsleiste mit einem quadratischen Querschnitt.

Die seitlichen Begrenzungsflächen der Führungsleisten werden spielfrei oder spielarm zwischen den parallelen Seitenflächen der Vertiefung im Bohrkopf aufgenommen. Die Stützfläche der Führungsleiste stützt sich auf der Grundfläche der Vertiefung ab, so dass eine exakte Positionierung und formschlüssige Verbindung zwischen den Vertiefungen und den Führungsleisten hergestellt wird.

Die tangentialen Kräfte werden zwischen den Seitenflächen der Vertiefung und den seitlichen Begrenzungsflächen der Führungsleisten übertragen. Die Radialkräfte werden von der Führungsleiste über die Stützfläche in die Grundfläche eingeleitet, so dass auch hier eine sehr direkte und leistungsfähige Kraftübertragung möglich ist.

Die Führungsleisten können ebene Verbindungsflächen zwischen den Begrenzungsflächen und der Stützfläche aufweisen.

Der Winkel zwischen der Stützfläche und der Verbindungsfläche kann ebenfalls zwischen 30° und 60° liegen. Bevorzugt sind auch hier 45°.

Alternativ ist es auch möglich, dass zwischen den Begrenzungsflächen und der seitlichen Begrenzung der Stützfläche mindestens eine gekrümmte Verbindungsfläche vorgesehen ist. Diese Verbindungsfläche kann konvex oder konkav gekrümmt sein.

In jedem Fall wird die Kerbwirkung verringert und der für den Kühlschmiermittelkanal zur Verfügung stehende Querschnitt im Schaft des Bohrers wird vergrößert.

Die Führungsleisten sind bevorzugt aus Hartmetall hergestellt. Auch der Bohrkopf wird in der Regel aus Vergütungsstahl hergestellt. Allerdings ist die Erfindung nicht auf diesen Werkstoff beschränkt.

Oft ist es vorteilhaft, wenn die Führungsleiste mit einer Hartstoffbeschichtung versehen ist, um den Verschleiß zu verringern. Entsprechendes gilt auch für eine auswechselbare Schneidplatte.

Um die Schneidplatte formschlüssig und exakt positioniert an dem Bohrkopf zu platzieren, ist dementsprechend ein Plattensitz an der Spitze des Bohrkopfs vorgesehen.

Die Führungsflächen der Führungsleisten sind zylindrisch, wobei der Durchmesser der Zylinderfläche gleich groß oder kleiner als der Durchmesser des Einlippenbohrers ist.

Zusätzlich zu den zwei Führungsleisten im Bohrkopf kann eine zweite Gruppe von Führungsleisten vorhanden sein, die axial beabstandet zu der ersten Gruppe von Führungsleisten am Schaft 12 des Einlippenbohrers 1 angeordnet ist.

Weitere Vorteile und vorteilhafte Ausgestaltungen der Erfindung sind der Zeichnung, deren Beschreibung und den Patentansprüchen entnehmbar.

### Zeichnung

### Es zeigen:

- Figur 1: eine vereinfachte Darstellung eines Einlippenbohrers ohne Wechselteilen;
- Figur 2: eine Isometrie eines Ausführungsbeispiels eines erfindungsgemäßen Einlippenbohrers;
- Figur 3: eine Ansicht von vorne (stark vergrößert) auf das Ausführungsbeispiel gemäß Figur 2;
- Figur 4: das Ausführungsbeispiel gemäß Figur 2 in zwei Seitenansichten;
- Figuren 5 und 6: zeigen die Spitze eines weiteren Ausführungsbeispiels eines erfindungsgemäßen Einlippenbohrers in einer Isometrie;
- Figur 7: zeigt eine Ansicht von vorne auf ein zweites Ausführungsbeispiel eines erfindungsgemäßen Einlippenbohrers; und die
- Figuren 8 bis 11: zeigen verschiedene Querschnittsformen erfindungsgemäßer Vertiefungen und Führungsleisten.

### Beschreibung der Ausführungsbeispiele

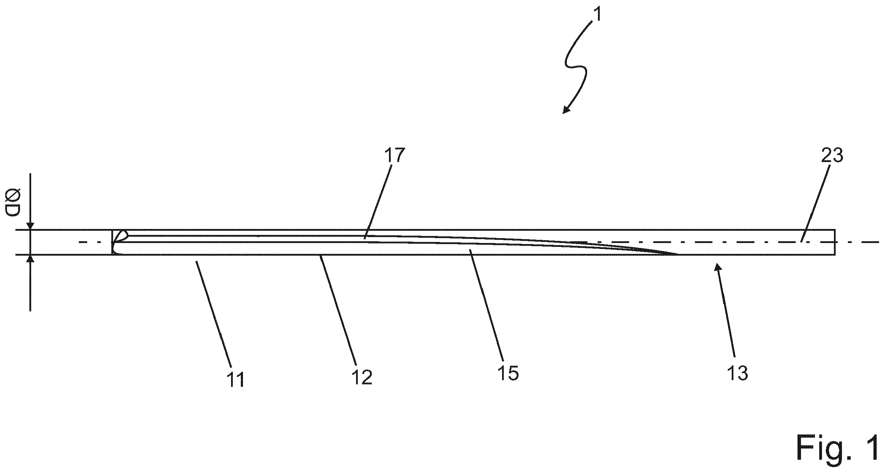

In der Figur 1 ist ein Einlippenbohrer 1 ohne Wechselteile schematisch und etwas vereinfacht dargestellt. Anhand der Figur 1 werden einige Begriffe erläutert. Der Einlippenbohrer 1 besteht aus einem Bohrkopf 11, einem Profilschaft 12 und einem Einspannende 13. Mit dem Einspannende 13 wird der Einlippenbohrer in einer nicht dargestellten Tiefbohrmaschine aufgenommen.

Der erfindungsgemäße Bohrkopf 11 kommt in der Regel bei gelöteten Werkzeugen zum Einsatz. Bei ihnen werden der Bohrkopf 11, ein Profilschaft 12 und ein Einspannende 13 miteinander verlötet. Allerdings ist die Erfindung nicht auf diese Art von Werkzeuge beschränkt. Sie können unter anderem auch bei Vollschaft-Werkzeugen zum Einsatz kommen.

Die Drehachse bzw. die Mitte des Bohrkopfs 11 hat das Bezugszeichen 23. In dem Bohrkopf 11 und dem Profilschaft 12 ist eine Sicke ausgebildet, die von einer Spanfläche 15 und einer Wand 17 begrenzt wird. Der erfindungsgemäße Einlippenbohrer 1 kann einen Durchmesser D von zum Beispiel zehn Millimetern haben. Dadurch ist der Querschnitt des Bohrkopfs 11 und der Sicke begrenzt.

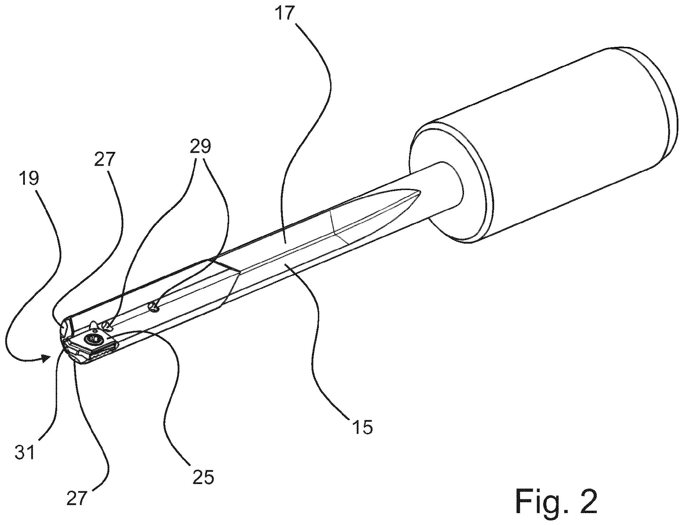

In der Figur 2 ist nun eine Isometrie eines ersten Ausführungsbeispiels eines erfindungsgemäßen Einlippenbohrers mit Wechselteilen dargestellt.

Eine Spitze ist mit dem Bezugszeichen 19 versehen. In der Figur 2 ist eine auswechselbare Schneidplatte 25 gut sichtbar. Von den Führungsleisten 27 sind in dieser Darstellung nur die vorderen Enden sichtbar. In der Sicke kann man zwei Innengewinde 29 erkennen, welche zur Befestigung von einer der beiden Führungsleisten 27 sowie eines Führungsleistenanschlags dienen.

Ein Austritt 31 des Kühlschmiermittelkanals an der Spitze 19 des Bohrkopfs 11 ist in der Figur 2 ebenfalls sichtbar.

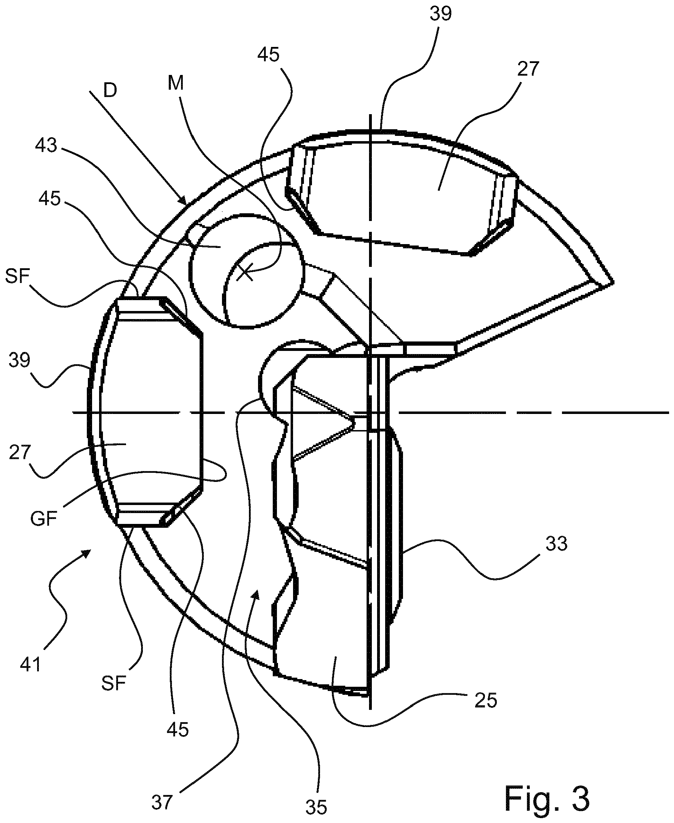

Die Figur 3 zeigt eine Ansicht von vorne, d.h. auf die Spitze 19 des Einlippenbohrers. In der Figur 3 sind die eingesetzte Schneidplatte 25 sowie der Schraubenkopf 33, der zur Befestigung der Schneidplatte 25 dient, sichtbar. Die Schneidplatte 25 ist in einem Plattensitz 35 des Bohrkopfs 11 aufgenommen. Details des Plattensitzes werden im Zusammenhang mit dieser Erfindung nicht erläutert. Es seien jedoch diesbezüglich zwei Hinweise erlaubt:
An dem Übergang zwischen zwei Flächen des Plattensitzes 35 ist ein Freistich 37 vorgesehen. Er ist Teil des Plattensitzes 35.

Die "Grundfläche" des Plattensitzes 35 und die Unterseite der Schneidplatte 25 sind bei dem dargestellten Ausführungsbeispiel nicht eben, sondern weisen mehrere Rillen auf, die einen Formschluss zwischen Schneidplatte 25 und Plattensitz 35 bewirken. Die Erfindung ist nicht auf Einlippenbohrer mit derartig ausgestalteten Plattensitzen 35 beschränkt.

In der Figur 3 sind die Führungsleisten 27 gut zu erkennen. Sie umfassen eine gekrümmte Führungsfläche 39. Die Krümmung der Führungsfläche 39 entspricht in etwa dem Durchmesser der Bohrung, die mit dem Einlippenbohrer 1 hergestellt wird.

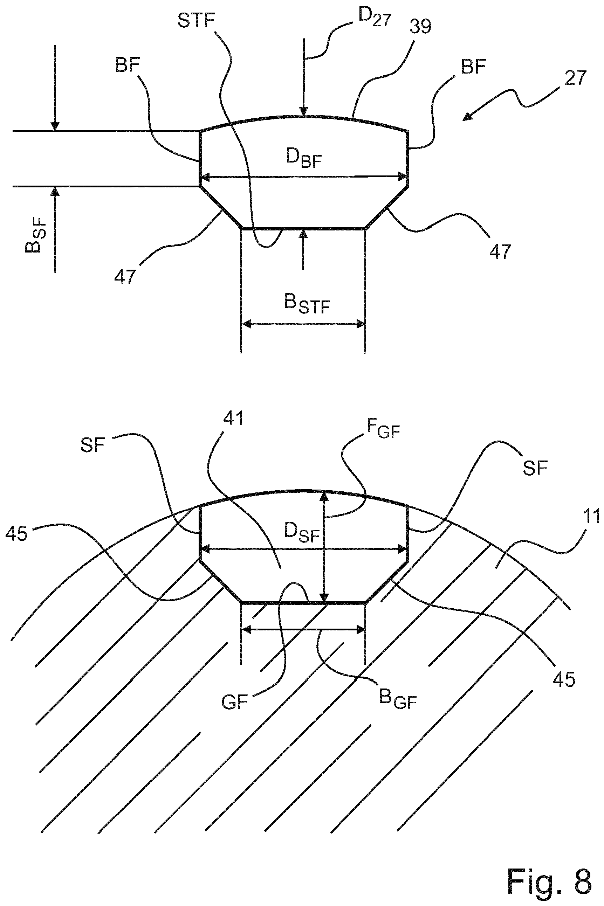

Die Führungsleisten 27 sind in Vertiefungen 41 aufgenommen, die zwei parallele Seitenflächen SF und eine Grundfläche GF aufweisen. Die geometrischen Details der Führungsleisten 39 und der Vertiefung 41 werden anhand der Figuren 8 bis 11 illustriert und erläutert.

Deutlich ist in der Figur 3 zu erkennen, dass bei diesem Ausführungsbeispiel die Vertiefungen 41 zwischen den Seitenflächen SF und der Grundfläche GF eine ebene Verbindungsfläche 45 aufweisen. Diese ebene Verbindungsfläche 45 verläuft in der Figur 3 unter einem Winkel von etwa 45° zur Grundfläche GF. Sie stellt in diesem Ausführungsbeispiel die Winkelhalbierende zwischen der Grundfläche GF und den Seitenflächen SF dar.

In der Figur 3 ist der Austritt des Kanals 43 an der Stirnseite bzw. Spitze 19 des Einlippenbohrers gut zu erkennen. Der Kanal 43 hat einen kreisrunden Querschnitt. Durch die als Winkelhalbierende ausgeführten ebenen Verbindungsflächen entsteht im Schaft des Einlippenbohrers mehr Platz für den Kanal 43. Anders ausgedrückt: Der Durchmesser des Kanals 43 kann gegenüber herkömmlichen Einlippenbohrern, deren Vertiefungen einen rechteckigen Querschnitt aufweisen, signifikant vergrößert werden.

Des Weiteren ist gut zu erkennen, dass der Mittelpunkt M des Kanals 43 in der Mitte zwischen den Verbindungsflächen 45 der beiden Vertiefungen 41 und in der Mitte zwischen einem Außendurchmesser D und dem Plattensitz 35 für die Schneidplatte 25m angeordnet ist.

Im vorliegenden Fall ist der Abstand zwischen dem Mittelpunkt M des Kanals 43 und dem Freistich 37, der ebenfalls Teil des Plattensitzes 35 ist, maßgeblich. Der Freistich 37 hat den geringsten Abstand zum Kanal 43. Daher ist dieser Abstand maßgeblich für die Anordnung des Mittelpunkts M des Kanals 43.

Auf diese Weise wird die zwischen den Vertiefungen 41, dem Außendurchmesser D und dem Plattensitz 35 bzw. dem Freistich 37 vorhandene Querschnittsfläche des Bohrkopfs 11 optimal ausgenutzt, um einen Kühlschmiermittelkanal 43 mit möglichst großem Durchmesser unterzubringen bei zugleich stabilem Werkzeuggrundkörper beziehungsweise Bohrkopf.

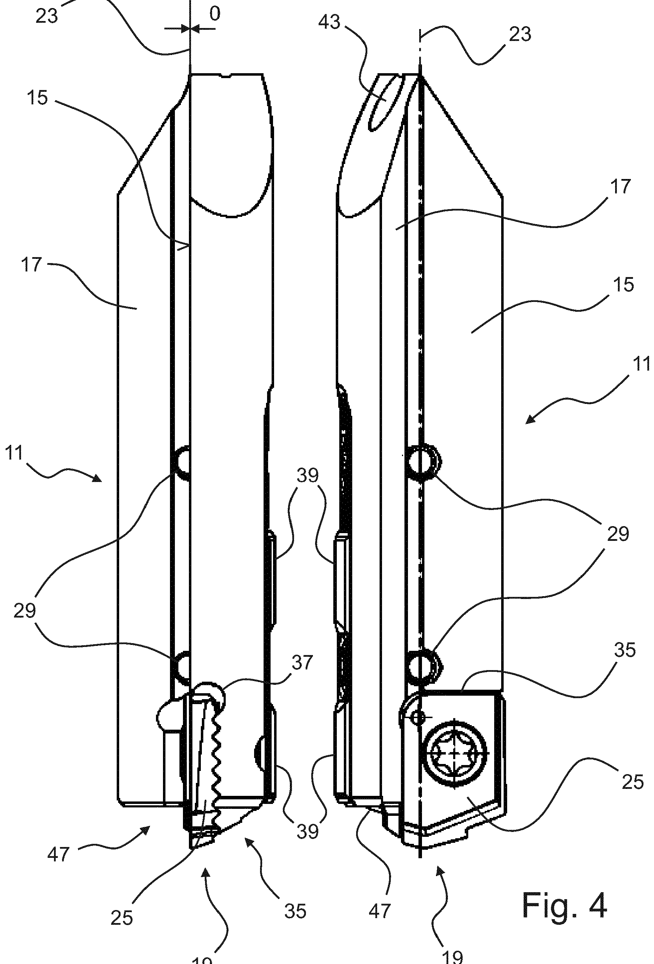

In der Figur 4 sind zwei Seitenansichten des erfindungsgemäßen Einlippenbohrers dargestellt, anhand derer die Gestaltung der Bohrerspitze 19 bzw. des Plattensitzes 35 näher erläutert werden kann.

In der Figur 4 sieht man die Führungsleisten 27, die sich parallel zur Drehachse 23 erstrecken. Die Führungsflächen 39 sind unterbrochen, dort wo die Stufenbohrungen für die Befestigungsschrauben vorgesehen sind. Dadurch ist gewährleistet, dass der Schraubenkopf nicht in Kontakt mit der Bohrung gerät, sondern dass ausschließlich die Führungsflächen 39 an der Bohrungswand (nicht dargestellt) anliegen.

Im Bereich der Spitze 19 weist der Bohrkopf 11 eine Ausnehmung 47 auf. Der Kühlschmiermittelkanal 43 endet bzw. mündet in der Ausnehmung 47. Die Ausnehmung 47 wiederum ist so gestaltet, dass das aus dem Kanal austretende Kühlschmiermittel auf direktem Weg zur Spanfläche und den Schneidkanten der Schneidplatte 45 gelangen kann. Dadurch wird eine optimale Kühlung und eine optimale Spanabfuhr erreicht. Die Erfindung ist nicht auf diese besonders vorteilhafte Ausgestaltung der Spitze beschränkt.

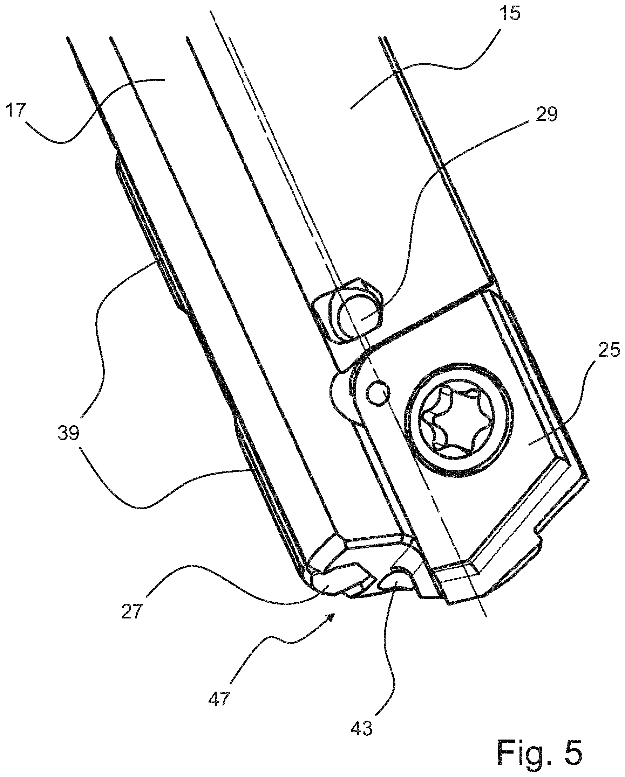

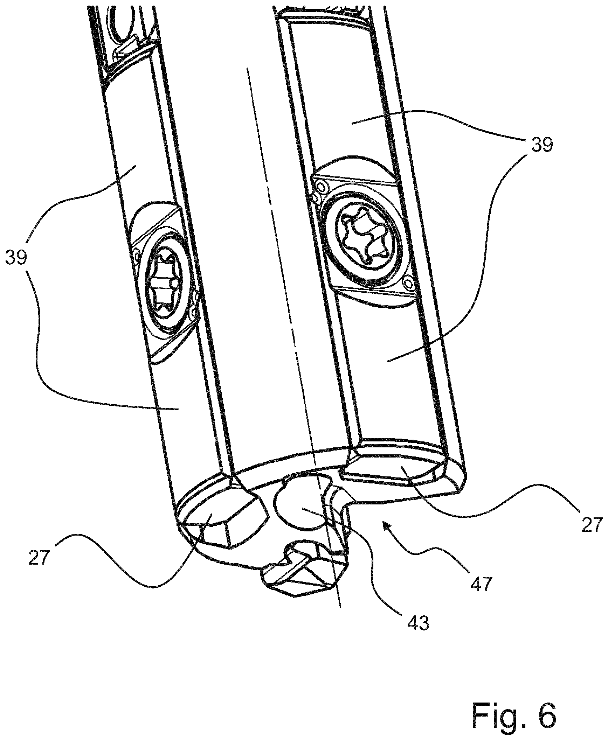

Die Geometrie der Aussparung 47 ist in den Figuren 5 und 6 ebenfalls gut zu erkennen.

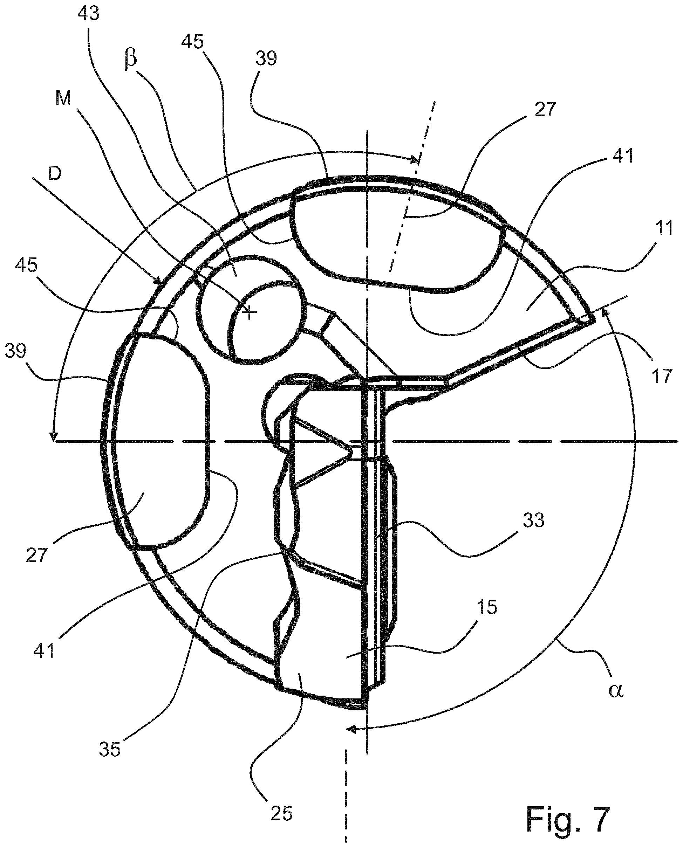

In der Figur 7 ist eine Ansicht von vorne auf ein weiteres Ausführungsbeispiel eines erfindungsgemäßen Einlippenbohrers 1 dargestellt. Bei diesem Ausführungsbeispiel sind die Verbindungsflächen zwischen den Seitenflächen SF und der Grundfläche GF der Vertiefungen 41 als einfach gekrümmte konkave Flächen ausgestaltet. Auch dadurch wird der Bauraum im Bohrkopf 11 zwischen den Vertiefungen 41 deutlich vergrößert. Vorteilhaft an dieser Ausführungsform ist die nochmals verringerte Kerbwirkung aufgrund des "weichen" Übergangs zwischen den Seitenflächen SF und der Grundfläche GF.

In der Figur 7 ist auch gut zu erkennen, dass ein Winkel β, um den die Vertiefungen 41 in Umfangsrichtung versetzt angeordnet sind, größer als 90° ist. Der Winkel β kann beispielsweise 115° betragen. Sehr vorteilhaft ist es, wenn er kleiner als 118° ist.

Dadurch, dass der Winkel β größer als 90° ist, entsteht mehr Platz zwischen den Verbindungsflächen 45 der Vertiefungen 41, was dem Durchmesser des Kühlschmiermittelkanals 43 zugutekommt.

Letztendlich kann der Winkel β so gewählt werden, dass der Abstand zwischen dem Mittelpunkt M des KühlschmiermittelKanals 43 zum Plattensitz 35 bzw. zu dessen Freistich 37 und zum Durchmesser D des Bohrers genauso groß ist, wie der Abstand zwischen dem Mittelpunkt M und den Verbindungsflächen 45 der Vertiefungen 41. Diese Abstände sind bereits anhand der Figur 3 erläutert worden. Dadurch wird einerseits der Bauraum/die Querschnittsfläche zwischen den Vertiefungen 41 optimal ausgenutzt und andererseits wird der Winkel β auf das notwendige Maß begrenzt, so dass die Vertiefungen 41 nicht weiter als notwendig voneinander beabstandet sind. Ein größerer Winkel β führt letztendlich irgendwann dazu, dass der Winkel α verringert werden muss, was in der Regel keine Vorteile bietet.

Mit "α" ist der Winkel zwischen der Spanfläche 15 und der Wand 17 bezeichnet. Sie begrenzen die Sicke es Einlippenbohrers. Der Winkel "α" ist bei diesem Ausführungsbeispiel etwa gleich 115°. Je größer der Winkel α ist, desto mehr Volumen steht in der Sicke für den Abtransport der Späne bzw. des Kühlschmiermittels zur Verfügung. Daher ist ein großer Winkel α grundsätzlich erstrebenswert.

Anhand der Figuren 8ff werden weitere Querschnitte der Vertiefungen 41 sowie der zugehörigen Querschnitte der Führungsleisten 27 dargestellt. Dabei ist die Führungsleiste 27 nicht in die Vertiefung 41 eingesetzt. Auch das Gewinde und die Bohrung für die Befestigungsschrauben sind nicht dargestellt.

In der Figur 8 ist exemplarisch eine Vertiefung 41 eines ersten Ausführungsbeispiels eines Einlippenbohrers und einer Führungsleiste 27 dargestellt. Bei diesem Ausführungsbeispiel ist die Verbindungsfläche 45 zwischen den Seitenflächen SF und der Grundfläche GF der Vertiefung 41 als ebene Verbindungsfläche 47 ausgeführt. Sie hat einen Winkel von 45° zu der Grundfläche GF und den Seitenflächen SF. D.h., sie ist als Winkelhalbierende ausgeführt.

In entsprechender Weise ist zwischen den Begrenzungsflächen BF und der Stützfläche STF der Führungsleiste 27 eine ebene Verbindungsfläche 47 ausgebildet.

Somit ist es möglich, die Führungsleiste 27 in die Vertiefung 41 einzusetzen, so dass die seitlichen Kräfte, d.h. die Kräfte in Umfangsrichtung, zwischen den Begrenzungsflächen BF und den Seitenflächen SF übertragen werden. Die in radialer Richtung wirkenden Kräfte werden über die Stützfläche STF der Verbindungsleiste 27 auf die Grundfläche GF übertragen.

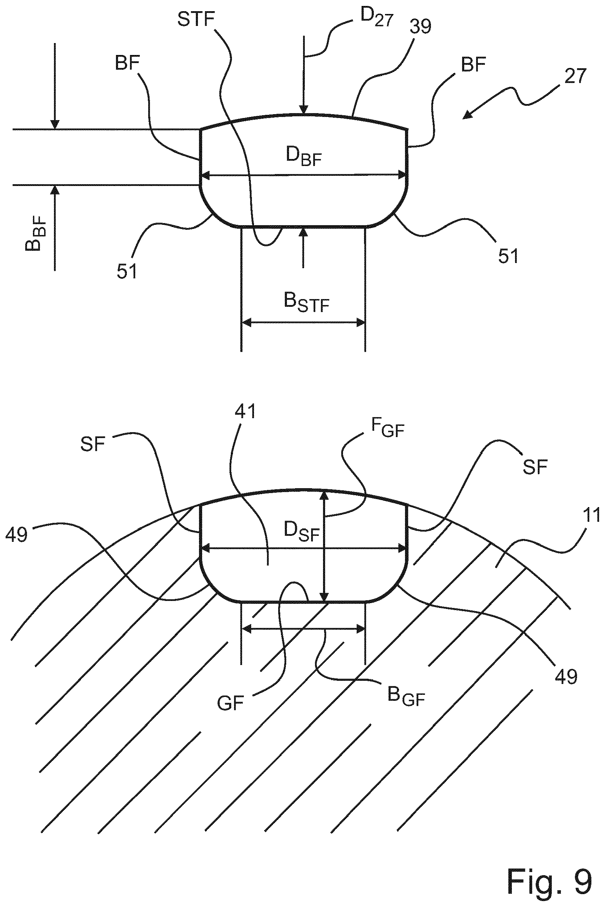

In der Figur 9 ist ein Ausführungsbeispiel dargestellt, bei dem die Verbindungsflächen 49 und 51 als gekrümmte Flächen ausgeführt sind.

Die Verbindungsflächen der Vertiefung 49 sind als einfach gekrümmte konkave Flächen ausgeführt.

Die Verbindungsflächen 51 der Führungsleiste 27 sind als einfach gekrümmte konvexe Flächen ausgeführt.

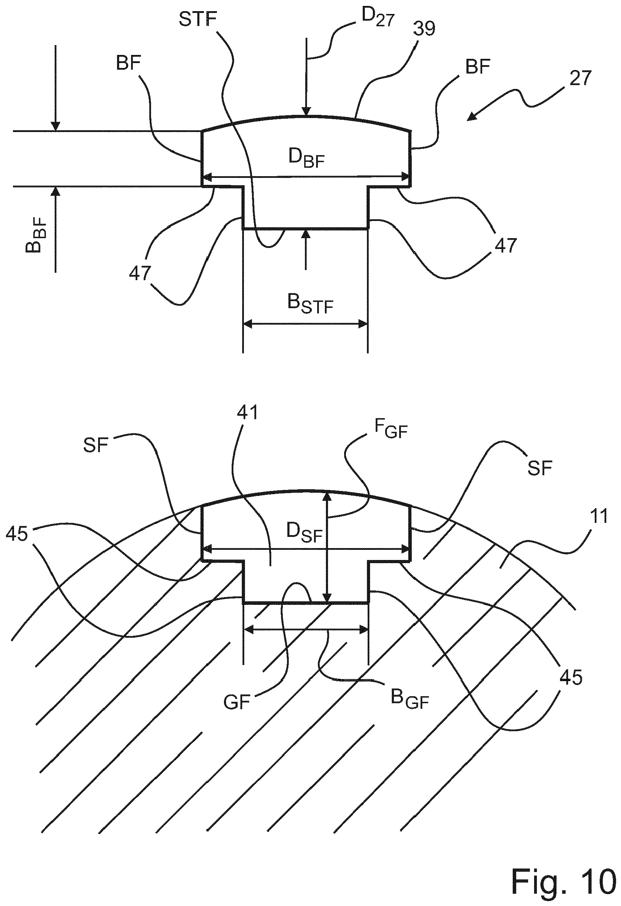

In der Figur 10 ist ein Ausführungsbeispiel dargestellt, bei der der Übergang/die Verbindung zwischen den Seitenflächen SF und der Grundfläche GF mit Hilfe von zwei ebenen (nicht gekrümmten) Verbindungsflächen 45 in der Vertiefung 41 hergestellt wird.

Entsprechend weist auch die Führungsleiste 27 mehrere ebene Verbindungsflächen 47 auf, am Übergang zwischen den Begrenzungsflächen BF und der Stützfläche STF.

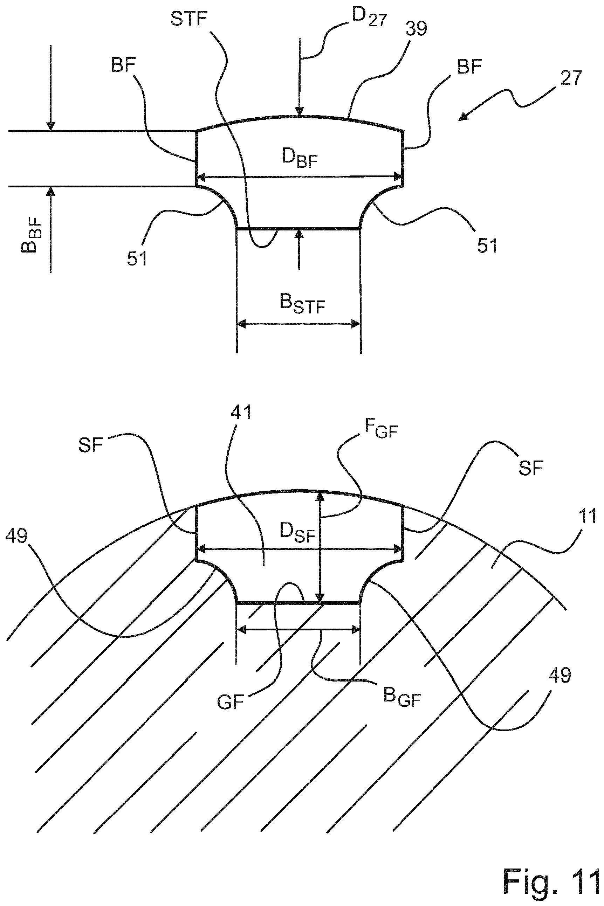

In der Figur 11 ist ein Ausführungsbeispiel dargestellt, bei dem die gekrümmten Verbindungsflächen 49 und 51 bei der Vertiefung konvex gekrümmt sind und bei der Führungsleiste 27 dementsprechend konkav gekrümmt sind. Diese Ausführungsform stellt besonders viel "zusätzlichen" Bauraum im Bohrkopf 1 für den Kanal 43 zu Verfügung.

Die Querschnitte der erfindungsgemäßen Führungsleisten 27 und die Querschnitte der erfindungsgemäßen Vertiefungen müssen nicht geometrisch ähnlich sein. Man kann zum Beispiel und die in der Figur 8, Figur 10 und Figur 11 dargestellten Führungsleisten 27 in die in der Figur 9 dargestellte Vertiefung 41 einsetzen. Ebenso ist es möglich, die in der Figur 10 dargestellte Führungsleiste 27 in die in der Figur 11 dargestellte Vertiefung 41 einsetzen. Voraussetzung ist, dass die Stützfläche STF der Führungsleiste 27 auf der Grundfläche GF der Vertiefung 41 aufliegt, und dass die Breite D_{BF} der Führungsleiste 27 auf die Breite D_{SF} der Vertiefung 41 abgestimmt ist.

### Bezugszeichenliste

1 Einlippenbohrer
11 Bohrkopf
12 Profilschaft
13 Einspannende
15 Spanfläche
17 Wand
19 Spitze Stirnseite
23 Drehachse des Einlippenbohrers
25 Schneidplatte
27 Führungsleiste
29 Innengewinde
31 (Kühlschmiermittel-)Kanal
33 Schraubenkopf
35 Plattensitz
37 Freistich
39 Führungsfläche
41 Vertiefung zur formschlüssigen Aufnahme der Führungsleisten
43 (Kühlschmiermittel-)Kanal
45 ebene Verbindungsfläche
47 ebene Verbindungsfläche
49 gekrümmte Verbindungsfläche
51 gekrümmte Verbindungsfläche
SF parallele Seitenfläche
GF Grundfläche
B_{GF} Breite der Grundfläche
DSF Abstand der Seitenflächen
B_{SF} Breite der Seitenfläche
T_{GF} Tiefe der Vertiefung
Unterkante der Seitenfläche
seitliche Begrenzung der Grundfläche
β Winkel in Umfangsrichtung zwischen den Vertiefungen
M Mittelpunkt des Kühlschmiermittelkanals
α Winkel zwischen Spanfläche und Wand
seitliche Begrenzungsflächen
STF Stützfläche
B_{STF} Breite der Stützfläche
B_{BF} Breite der Begrenzungsflächen

## Patentansprüche

1. Einlippenbohrer umfassend einen Bohrkopf (11), wobei der Bohrkopf (11) zwei auswechselbare Führungsleisten (27), eine Sicke und einen Kühlschmiermittelkanal (43) umfasst, wobei der Bohrkopf (11) zwei Vertiefungen (41) zur Aufnahme der Führungsleisten (27) aufweist, wobei die Vertiefungen (41) zwei parallele Seitenflächen (SF) und eine Grundfläche (GF) aufweisen, und wobei der Kühlschmiermittelkanal (41) in eine Stirnseite oder Spitze (19) des Bohrkopfs (11) mündet, **dadurch gekennzeichnet, dass** eine Breite (BGF) der Grundfläche (GF) mindestens um 30% kleiner ist als ein Abstand (DSF) der Seitenflächen (SF).

2. Einlippenbohrer umfassend einen Bohrkopf (11), wobei der Bohrkopf (11) zwei auswechselbare Führungsleisten (27), eine Sicke und einen Kühlschmiermittelkanal (43) umfasst, wobei der Bohrkopf (11) zwei Vertiefungen (41) zur Aufnahme der Führungsleisten (27) aufweist, wobei die Vertiefungen (41) zwei parallele Seitenflächen (SF) und eine Grundfläche (GF) aufweisen, und wobei der Kühlschmiermittelkanal (43) in eine Stirnseite (19) des Bohrkopfs (11) mündet, **dadurch gekennzeichnet, dass** eine Breite (B_{SF}) der Seitenflächen (SF) mindestens 30 % kleiner als eine Tiefe (T_{GF}) der Vertiefung (41) ist.

3. Einlippenbohrer nach einem der vorhergehenden Ansprüche, **dadurch gekennzeichnet, dass** zwischen einer Seitenfläche (SF) und der Grundfläche (GF) mindestens eine ebene Verbindungsfläche (45) vorgesehen ist.

4. Einlippenbohrer nach Anspruch 3, **dadurch gekennzeichnet, dass** zwischen den Seitenflächen (SF) und der Grundfläche (GF) mindestens ein Absatz vorgesehen ist.

5. Einlippenbohrer nach einem der vorhergehenden Ansprüche, **dadurch gekennzeichnet, dass** zwischen einer Seitenfläche (SF) und der Grundfläche (GF) mindestens einfach gekrümmte Verbindungsfläche (49) vorgesehen ist.

6. Einlippenbohrer nach Anspruch 5, **dadurch gekennzeichnet, dass** die gekrümmte Verbindungsfläche (49) konkav oder konvex gekrümmt ist.

7. Einlippenbohrer nach einem der vorhergehenden Ansprüche, **dadurch gekennzeichnet, dass** sich die Vertiefungen (41) im Wesentlichen parallel zu einer Drehachse (23) des Einlippenbohrers (1) erstrecken.

8. Einlippenbohrer nach einem der vorhergehenden Ansprüche, **dadurch gekennzeichnet, dass** die Vertiefungen (41) in Umfangsrichtung um einen Winkel β, der größer als 100° und kleiner als 118° ist, versetzt zueinander angeordnet sind.

9. Einlippenbohrer nach einem der Ansprüche 3 bis 7, **dadurch gekennzeichnet, dass** ein Mittelpunkt (M) des Kühlschmiermittelkanals (43) in der Mitte zwischen den ebenen Verbindungsflächen (45) oder in der Mitte zwischen den mindestens einfach gekrümmten Verbindungsflächen (49) der Vertiefungen (41) liegt.

10. Einlippenbohrer nach einem der vorhergehenden Ansprüche, **dadurch gekennzeichnet, dass** der Mittelpunkt (M) des Kühlschmiermittelkanals (43) in der Mitte zwischen einer (zylindrischen) Außenfläche des Bohrkopfs (11) und einem Plattensitz (35) einer auswechselbaren Schneidplatte (25) des Bohrkopfs (11) liegt.

11. Einlippenbohrer nach einem der vorhergehenden Ansprüche, **dadurch gekennzeichnet, dass** die Sicke von einer Spanfläche (15) und einer Wand (19) begrenzt wird, dass die Spanfläche (15) und die Wand (19) einen Winkel (α) einschließen und dass der Winkel (α) zwischen 105° und 125°, bevorzugt gleich 115°, beträgt.

12. Führungsleiste für einen Einlippenbohrer (1) umfassend eine Führungsfläche (39), zwei seitliche Begrenzungsflächen (BF) und mindestens eine Stützfläche (STF), wobei die seitlichen Begrenzungsflächen (BF) parallel zueinander verlaufen und die Begrenzungsflächen (BF) und die Stützfläche (STF) rechtwinklig zueinander angeordnet sind, **dadurch gekennzeichnet, dass** eine Breite (B_{STF}) der Stützfläche (STF) mindestens 30% kleiner ist als ein Abstand (D_{BF}) der Begrenzungsflächen (BF) .

13. Führungsleiste für einen Einlippenbohrer (1) umfassend eine Führungsfläche (39), zwei parallele seitliche Begrenzungsflächen (BF) und mindestens eine Stützfläche (STF), wobei die Begrenzungsflächen (BF) und die Stützfläche (STF) rechtwinklig zueinander angeordnet sind, **dadurch gekennzeichnet, dass** eine Breite (B_{STF}) der Begrenzungsflächen (BF) mindestens 30 % kleiner ist als eine Dicke (D) der Führungsleiste (39) ist.

14. Führungsleiste nach Anspruch 12 oder 13, **dadurch gekennzeichnet, dass** zwischen den Begrenzungsflächen (BF) und der Stützfläche (STF) mindestens eine ebene Verbindungsfläche (47) vorgesehen ist.

15. Führungsleiste nach Anspruch 14, **dadurch gekennzeichnet, dass** zwischen den Begrenzungsflächen (BF) und der Stützfläche (STF) mindestens ein Absatz vorgesehen ist.

16. Führungsleiste nach Anspruch 12 oder 13, **dadurch gekennzeichnet, dass** zwischen den Begrenzungsflächen (BF) und der Stützfläche (STF) mindestens eine gekrümmte Verbindungsfläche (51) vorgesehen ist.

17. Führungsleiste nach einem der vorhergehenden Ansprüche, **dadurch gekennzeichnet, dass** sie aus Hartmetall besteht.

18. Führungsleiste nach einem der vorhergehenden Ansprüche, **dadurch gekennzeichnet, dass** sie mit einer Hartstoffbeschichtung versehen ist.
